# FASCICULE DE BREVET EUROPEEN

(11) **EP 1 323 797 B1**
(45) Date de publication et mention de la délivrance du brevet: **20.08.2008**
(21) Numéro de dépôt: 02293124.0
(22) Date de dépôt: 17.12.2002
(51) Int. Cl.: C09D 183/10, H01B 3/46, C08G 77/458, C08G 77/452, C08G 77/42

(54) **Procédé de fabrication d'un vernis d'emaillage ayant un faible coefficient de frottement et conducteur électrique revêtu d'un tel vernis**
Verfahren zur Herstellung einer Emaillack mit niedrigem Reibungskoeffizient und mit dieser Emaillack beschichtete elektrische Leiter
Process for preparing an enamel coating having a low friction index and an enamel-coated electrical conductor

(30) Priorité: 21.12.2001 FR 0117131
(43) Date de publication de la demande: 02.07.2003
(73) Titulaire: Essex Europe, 60200 Compiegne (FR)
(72) Inventeur: Studer, Virginie, 69680 Chassieu (FR); Schildknecht, Laurent, 69003 Lyon (FR); Piechaczyk, Arnaud, 69006 Lyon (FR)
(74) Mandataire: Lenne, Laurence

(56) Documents cités:
- EP-A- 0 588 560
- US-A- 3 681 282
- US-A1- 2001 020 081
- PATENT ABSTRACTS OF JAPAN vol. 1997, no. 11, 28 novembre 1997 (1997-11-28) & JP 09 176526 A (AUTO KAGAKU KOGYO KK), 8 juillet 1997 (1997-07-08)
- PATENT ABSTRACTS OF JAPAN vol. 013, no. 063 (C-568), 13 février 1989 (1989-02-13) & JP 63 256629 A (CHISSO CORP), 24 octobre 1988 (1988-10-24)

## Description

La présente invention concerne un procédé de fabrication d'un vernis d'émaillage ayant un faible coefficient de frottement, et un conducteur électrique revêtu d'un tel vernis d'émaillage.

Dans la fabrication des moteurs électriques, plus on peut incorporer une grande quantité de fil de bobinage dans le coeur du stator, plus les performances du moteur sont bonnes. En outre, les fabricants de moteurs souhaitent également accroître le rendement de fabrication. Ainsi, de manière connue, ces bobinages sont introduits de manière automatique dans les stators.

Les fils utilisés dans ces moteurs électriques sont typiquement constitués d'un conducteur électrique revêtu d'une ou de plusieurs couches d'isolation à base de vernis d'émaillage.

Ces fils sont produits à très grandes vitesses, et sont donc soumis à des frottements et des contraintes mécaniques importants qui peuvent endommager leur isolation et conduire à un enroulement irrégulier. L'introduction des bobinages entraîne également ce type de frottements et de contraintes.

Pour résoudre ce problème, il est connu d'après le document US-4 693 936 de réaliser l'isolation extérieure de ces fils de bobinages au moyen d'un vernis d'émaillage obtenu par réaction d'un anhydride acide, d'un di-isocyanate et d'un organosiloxane mufti-fonctionnel.

L'intérêt de ce genre de vernis réside dans le fait qu'il est composé d'un polymère modifié à l'aide de polysiloxane. Du fait que les polysiloxanes ont une plus grande affinité avec l'air qu'avec les milieux organiques, ils s'agrègent et migrent vers la surface pendant la polymérisation du vernis. Cette migration crée une fine couche riche en polysiloxane à la surface de la couche de vernis, cette couche riche en polysiloxane assurant les propriétés de glissement recherchées.'

Le procédé décrit dans le document US-4 693 936 pour fabriquer le vernis mentionné ci-dessus consiste à :
- faire réagir un anhydride avec un isocyanate
- faire réagir le produit ainsi obtenu avec un polysiloxane fonctionnalisé.

Ce procédé n'est pas satisfaisant. En effet, le polysiloxane ne réagit pas entièrement ; de ce fait, la partie de polysiloxane n'ayant pas réagi est libre à l'intérieur du polymère, et sublime durant la polymérisation de la couche de vernis. Ceci entraîne notamment un endommagement du catalyseur se trouvant dans le four de polymérisation, conduisant à une détérioration anticipée de ce dernier.

En outre, le vernis réalisé n'est pas stable dans le temps, et l'on observe au bout de quelques heures une démixion du vernis, avec formation de dépôt solide à la surface du produit liquide.

On connaît par ailleurs, par le document US 2001/0020081, un procédé de fabrication d'un vernis polyimide à partir d'un polysiloxane fonctionnalisé obtenu par réaction d'anhydride 2,3,3',4'-biphényltétracarboxylique (monomère fonctionnalisé entrant dans la synthèse du vernis) avec un polydiméthylsiloxane fonctionnalisé.

Le vernis ainsi obtenu est également instable, c'est-à-dire qu'il précipite. En outre, il ne possède pas un coefficient de frottement aussi faible que souhaité.

Le but de la présente invention est donc de mettre au point un procédé de fabrication d'un vernis du type mentionné plus haut, n'entraînant pas de détérioration anticipée du four de polymérisation et permettant de fabriquer un vernis stable dans le temps et ayant des propriétés de glissement améliorées, c'est-à-dire un coefficient de frottement plus faible que celui des vernis de l'art antérieur.

La présente invention propose à cet effet un procédé de fabrication d'un vernis d'émaillage choisi parmi les polyuréthanes, les polyamides, les polyamides-imides, les polyesters, les polyesters-imides, les polyesters amides-imides, les polyimides, les composés polyépoxydes, les composés polyphénoxydes, ledit procédé comprenant une opération dans laquelle on fait réagir un polysiloxane fonctionnalisé comprenant un premier groupement fonctionnel réactif avec un premier monomère fonctionnalisé entrant dans la synthèse dudit vernis, ledit premier monomère comprenant un deuxième groupement fonctionnel réactif avec ledit premier groupement fonctionnel, pour obtenir un oligomère polysiloxane fonctionnalisé,
ledit procédé étant caractérisé en ce qu'il comprend ensuite les opérations suivantes :
- on fait réagir ledit oligomère polysiloxane fonctionnalisé avec un deuxième monomère fonctionnalisé entrant dans la synthèse dudit vernis, ledit deuxième monomère comprenant un troisième groupement fonctionnel réactif avec ledit oligomère polysiloxane fonctionnalisé, pour obtenir un polysiloxane greffé au moyen de chaînes organiques identiques à celles dudit vernis,
- on effectue la synthèse dudit vernis à partir desdits premier et deuxième monomères et dudit polysiloxane greffé.

Ainsi, grâce à l'invention, on effectue un pré-traitement du polysiloxane pour y incorporer une ou plusieurs chaînes organiques (hydrocarbonées) identiques à celles du vernis que l'on veut synthétiser. De ce fait, lors de la synthèse du vernis, le polysiloxane greffé réagit entièrement, et il ne reste pas de résidu préjudiciable au four de polymérisation. Par ailleurs, le polysiloxane greffé se dissout mieux dans le milieu organique, de sorte que le vernis final obtenu est plus stable que dans l'art antérieur. De plus, le coefficient de frottement de ce vernis est nettement plus faible que ceux des vernis de l'art antérieur.

Les chaînes organiques contiennent une répétition de plusieurs motifs consécutifs formés respectivement des premier et deuxième monomères alternés ; la longueur de ces chaînes est fonction de la quantité de premier et deuxième monomères introduits.

En pratique, on peut, pour la synthèse du vernis, remplacer une partie des monomères di-fonctionnalisés habituels par le polysiloxane greffé.

Selon une caractéristique avantageuse de l'invention, avant la synthèse dudit vernis, on greffe ledit polysiloxane fonctionnalisé sur ledit polysiloxane greffé.

Ceci permet d'améliorer encore les propriétés de glissement du vernis en augmentant la proportion de silicone dans le vernis.

Selon un mode de réalisation, lesdits groupements fonctionnels sont choisis parmi les groupements acides, anhydrides, alcools et amines.

De préférence, les monomères sont difonctionnalisés.

D'autres caractéristiques et avantages de la présente invention apparaîtront dans la description suivante de plusieurs exemples de mise en oeuvre de l'invention et d'un conducteur électrique revêtu d'une couche de vernis selon l'invention, donnés à titre illustratif et nullement limitatif.

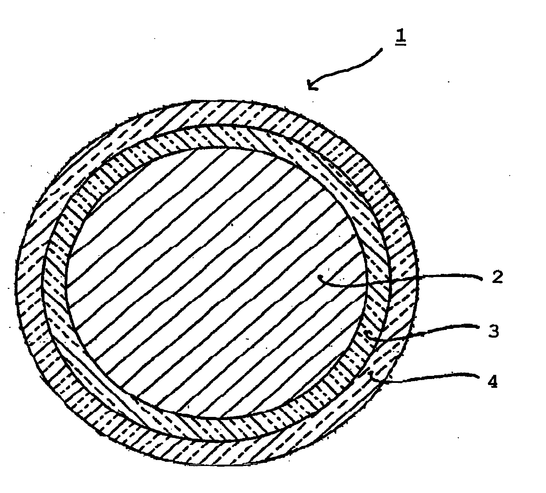

La figure 1 montre une vue en coupe transversale d'un conducteur selon l'invention.

Le conducteur 1 comprend une âme électriquement conductrice 2, en cuivre par exemple, revêtue d'une couche de vernis 3 en un vernis classique, elle-même revêtue d'une couche de vernis 4 selon l'invention, obtenu selon l'un des exemples 1 à 3 ci-dessous. La couche 4 de vernis selon l'invention est toujours la couche extérieure de revêtement du conducteur 1, puisqu'elle assure les propriétés de glissement ; le conducteur 1 peut bien entendu comprendre une ou plusieurs autres couches de vernis (non représentées) autres que la couche 3 sous la couche de vernis 4 selon l'invention.

### Exemple 1

Dans cet exemple, le polysiloxane greffé est destiné à être utilisé dans la synthèse de polyamide-imide.

On introduit 0,15 mole de polysiloxane fonctionnalisé acide et 1,5 mole de MDI (di-isocyanate de diphénylméthane) comme premier monomère fonctionnalisé dans 1000 g de N-méthylpyrrolidone à 80°C.

Le mélange est chauffé à 190°C et agité à cette température pendant 2 heures. On obtient un oligomère polysiloxane fonctionnalisé, c'est-à-dire comprenant des groupements fonctionnels isocyanates.

On refroidit ensuite la solution à 120°C et on introduit 1,2 mole d'anhydride trimellitique TMA comme deuxième monomère fonctionnalisé. Le mélange est chauffé à 160°C pendant 2 heures. On obtient un polysiloxane greffé à l'aide de courtes chaînes organiques identiques à celles du vernis polyamide-imide final.

On fait alors réagir 0,3 mole de polysiloxane en chauffant le mélange à 190°C, puis on agite le mélange à cette température pendant 1 heure.

Le diacide ainsi formé sera ensuite introduit dans la synthèse du polyamide-imide en remplacement d'une part variable des diacides usuels (acide téréphtalique, isophtalique, adipique, etc...). Cette synthèse est tout à fait classique et bien connue de l'homme du métier ; elle ne sera donc pas décrite plus en détail ici. On pourra se référer pour cela par exemple au document US-4 740 576.

### Exemple 2

Dans cet exemple, le polysiloxane greffé est destiné à être utilisé dans la synthèse de polyamide.

On introduit 0,15 mole de polysiloxane fonctionnalisé acide et 1,5 mole de MDI comme premier monomère fonctionnalisé dans 1000 g de N-méthylpyrrolidone à 80°C.

Le mélange est chauffé à 190°C et agité à cette température pendant 2 heures. On obtient un oligomère polysiloxane fonctionnalisé, c'est-à-dire comprenant des groupements fonctionnels isocyanates.

On refroidit ensuite la solution à 120°C et on introduit 1,2 mole d'acide téréphtalique TPA comme deuxième monomère fonctionnalisé. Le mélange est chauffé à 160°C pendant 2 heures, et agité à cette température pendant 1 heure. On obtient un polysiloxane greffé à l'aide de courtes chaînes organiques identiques à celles du vernis polyamide final.

On fait alors réagir 0,3 mole de polysiloxane en chauffant le mélange à 190°C, puis on agite le mélange à cette température pendant 1 heure.

Le diacide ainsi formé sera ensuite introduit dans la synthèse du polyamide en remplacement d'une part variable des diacides usuels (acide téréphtalique, sébacique, etc...). Cette synthèse est ici encore tout à fait classique et bien connue de l'homme du métier.

### Exemple 3

Dans cet exemple, le polysiloxane greffé est destiné à être utilisé dans la synthèse de polyester ou de polyester-imide.

On introduit 0,15 mole de polysiloxane fonctionnalisé acide et 1,5 mole de méthyl éthyl glycol comme premier monomère fonctionnalisé dans 1000 g de crésol. On obtient un oligomère polysiloxane fonctionnalisé, c'est-à-dire comprenant des groupements fonctionnels alcools.

Après réaction, on ajoute à la solution 1,2 mole d'acide téréphtalique TPA comme deuxième monomère fonctionnalisé. On laisse réagir pour former un polysiloxane greffé alcool à l'aide de courtes chaînes organiques identiques à celles du vernis polyester ou polyester-imide final.

On fait réagir alors 0,3 mole de polysiloxane.

Le diacide ainsi formé sera ensuite introduit dans la synthèse de polyester ou de polyester-imide, qui entrent dans la synthèse des polyuréthanes, en remplacement d'une part variable des diacides usuels. Cette synthèse est ici encore tout à fait classique et bien connue de l'homme du métier.

Grâce à l'invention, on peut donc obtenir des vernis d'émaillage ayant de faibles coefficients de frottements, utilisés notamment pour revêtir des conducteurs électriques entrant dans la fabrication des bobinages pour moteurs électriques. Le procédé selon l'invention conduit à la fabrication de produits stables dans le temps et n'entraînant pas de détérioration des fours de polymérisation étant donné que le polysiloxane est stabilisé.

L'utilisation d'un polysiloxane greffé selon l'invention dans le procédé classique de synthèse des vernis d'émaillage n'entraîne pas de modification de ce dernier et conduit à des vernis dont les propriétés autres que le coefficient de frottement sont comparables à celles des vernis existants.

Enfin, étant donné que la synthèse du polysiloxane greffé peut être effectuée au cours d'une étape préalable distincte de la synthèse du vernis lui-même, il est possible de se placer pour cette synthèse dans des conditions opératoires plus dures afin d'être sûr d'obtenir une réaction totale des différents réactifs, sans pénaliser la fabrication du vernis en elle-même.

## Revendications

1. Procédé de fabrication d'un vernis d'émaillage choisi parmi les polyuréthanes, les polyamides, les polyamides-imides, les polyesters, les polyesters-imides, les polyesters amides-imides, les polyimides, les composés polyépoxydes, les composés polyphénoxydes, ledit procédé comprenant une opération dans laquelle on fait réagir un polysiloxane fonctionnalisé comprenant un premier groupement fonctionnel réactif avec un premier monomère fonctionnalisé entrant dans la synthèse dudit vernis, ledit premier monomère comprenant un deuxième groupement fonctionnel réactif avec ledit premier groupement fonctionnel, pour obtenir un oligomère polysiloxane fonctionnalisé, ledit procédé étant **caractérisé en ce qu'**il comprend ensuite les opérations suivantes :
• on fait réagir ledit oligomère polysiloxane fonctionnalisé avec un deuxième monomère fonctionnalisé entrant dans la synthèse dudit vernis, ledit deuxième monomère comprenant un troisième groupement fonctionnel réactif avec ledit oligomère polysiloxane fonctionnalisé, pour obtenir un polysiloxane greffé comprenant des chaînes organiques identiques à celles dudit vernis,
• on effectue la synthèse dudit vernis à partir desdits premier et deuxième monomères et dudit polysiloxane greffé.

2. Procédé selon la revendication 1 **caractérisé en ce que** avant la synthèse dudit vernis, on greffe ledit polysiloxane fonctionnalisé sur ledit polysiloxane greffé.

3. Procédé selon l'une des revendications 1 ou 2 **caractérisé en ce que** lesdits groupements fonctionnels sont choisis parmi les groupements acides, anhydrides, alcools et amines.

4. Procédé selon l'une des revendications 1 à 3 **caractérisé en ce que** lesdits monomères sont difonctionnalisés.

5. Conducteur électrique **caractérisé en ce qu'**il est revêtu d'une couche de vernis d'émaillage obtenu par le procédé selon l'une des revendications 1 à 4.

## Claims

1. A method for manufacturing an insulating lacquer chosen from polyurethanes, polyamides, polyamide-imides, polyesters, polyester-imides, polyester amide-imides, polyimides, polyepoxy compounds, polyphenoxy compounds, said method comprising an operation, in which functionalized polysiloxane is reacted comprising a first functional group reactive with a first functionalized monomer included in the synthesis of said lacquer, said first monomer comprising a second functional group reactive with said first functional group, in order to obtain a functionalized polysiloxane oligomer, said method being **characterized in that** it subsequently comprises the followings operations:
- reacting said functionalized polysiloxane oligomer with a second functionalized monomer included in the synthesis of said lacquer, said second monomer comprising a third functional group reactive with said functionalized polysiloxane oligomer, in order to obtain a grafted polysiloxane comprising organic chains identical with those of said lacquer,
- synthesizing said lacquer from said first and second monomers and said grafted polysiloxane.

2. The method according to claim 1, **characterized in that** before synthesizing said lacquer, said functionalized polysiloxane is grafted onto said grafted polysiloxane.

3. The method according to any of claims 1 or 2, **characterized in that** said functional groups are chosen from the groups of acids, anhydrides, alcohols, and amines.

4. The method according to any of claims 1 to 3, **characterized in that** said monomers are difunctionalized.

5. An electrical conductor, **characterized in that** it is coated with a layer of the insulating lacquer obtained by the method according to any of claims 1 to 4.

## Patentansprüche

1. Verfahren zur Herstellung eines Isolierlacks, der aus Polyurethanen, Polyamiden, Polyamidimiden, Polyestern, Polyesterimiden, Polyesteramidimiden, Polyimiden, Polyepoxy-Verbindungen, Polyphenoxy-Verbindungen gewählt wird, wobei das Verfahren einen Arbeitsgang umfasst, bei dem ein funktionalisiertes Polysiloxan zur Reaktion gebracht wird, umfassend eine erste funktionelle Gruppe, die mit einem ersten funktionalisierten Monomer reagiert, das in die Synthese des Lacks eingebracht wird, wobei das erste Monomer eine zweite funktionelle Gruppe umfasst, die mit der ersten funktionellen Gruppe reagiert, um ein funktionalisiertes Polysiloxan-Oligomer zu erhalten, wobei das Verfahren **dadurch gekennzeichnet ist, dass** es anschließend die folgenden Arbeitsgänge umfasst:
- Reagierenlassen des funktionalisierten Polysiloxan-Oligomers mit einem zweiten funktionalisierten Monomer, das in die Synthese des Lacks eingebracht wird, wobei das zweite Monomer eine dritte funktionelle Gruppe umfasst, die mit dem funktionalisierten Polysiloxan-Oligomer reagiert, um ein Pfropfpolysiloxan zu erhalten, das organische Ketten umfasst, die mit denen des Lacks identisch sind,
- Synthetisieren des Lacks aus dem ersten und zweiten Monomer und dem Pfropfpolysiloxan.

2. Verfahren nach Anspruch 1, **dadurch gekennzeichnet, dass** vor dem Synthetisieren des Lacks das funktionalisierte Polysiloxan auf das Pfropfpolysiloxan gepfropft wird.

3. Verfahren nach einem der Ansprüche 1 oder 2, **dadurch gekennzeichnet, dass** die funktionellen Gruppen aus den Gruppen von Säuren, Anhydriden, Alkoholen und Aminen gewählt werden.

4. Verfahren nach einem der Ansprüche 1 bis 3, **dadurch gekennzeichnet, dass** die Monomere difunktionalisiert sind.

5. Elektrischer Leiter, **dadurch gekennzeichnet, dass** er mit einer Schicht des Isolierlacks, der durch das Verfahren nach einem der Ansprüche 1 bis 4 erhalten wird, überzogen ist.
